# NEUE EUROPÄISCHE PATENTSCHRIFT

(11) **EP 1 685 759 B2**
(45) Veröffentlichungstag und Bekanntmachung des Hinweises auf die Entscheidung über den Einspruch: **27.04.2022**
(45) Hinweis auf die Patenterteilung: 15.08.2018
(21) Anmeldenummer: 05022311.4
(22) Anmeldetag: 13.10.2005
(51) Int. Cl.: A01F 15/08, A01D 90/12, A01B 69/00

(54) **Vorrichtung zur gleichmässigen Beschickung von Arbeitsmaschinen**
System for uniform loading of working machines
Système pour l'alimentation uniforme des machines de travail

(30) Priorität: 31.01.2005 DE 102005004508
(43) Veröffentlichungstag der Anmeldung: 02.08.2006
(73) Patentinhaber: CLAAS Selbstfahrende Erntemaschinen GmbH, 33428 Harsewinkel (DE)
(72) Erfinder: Brunnert, Andreas, 33129 Delbrück (DE)
(74) Vertreter: CLAAS Gruppe

(56) Entgegenhaltungen:
- EP-A- 1 153 538
- EP-A1- 1 618 780
- EP-B1- 0 287 156
- DE-A1- 3 820 367
- DE-A1- 19 726 917
- US-A- 4 065 914
- US-A- 4 433 533
- US-A- 4 433 533
- US-A- 4 702 066
- US-A- 4 702 066
- US-A- 5 752 374
- US-A- 5 752 374
- US-A- 5 979 153
- A. STOLL: "Schwadführung mit GPS", Landtechnik, vol. 55, 2000, pages 104-105,
- L. HOFMANN: "Schwadabtastung mit Ultraschall", Landtechnik, vol. 48, no. 5, May 1993 (1993-05), pages 266-268,
- Uppenkamp N; Et Al: "ISO-BUS: Ein Terminal für alle Maschine", Top agrar, vol. 2, 2002, pages 124-126,

## Beschreibung

Die Erfindungen betrifft eine Vorrichtung zum gleichmäßigen Beschickung von Arbeitsmaschinen gemäß dem Oberbegriff des Anspruchs 1.
In der DE 38 11 649 ist eine von einem Traktor gezogene Ballenpresse offenbart, die einen Erntegutstrom mittels Aufsammler aufnimmt und über eine Querförderschnecke auf die Presskanalbreite zusammengeführt, einer Pressvorrichtung zuführt. Mit oberhalb des Aufsammlers angeordneten, höhenbeweglichen Tastbügeln wird die Erntegutverteilung bezogen auf die Breite des Erntegutstromes kontinuierlich erfasst, wobei den Tastbügeln Messfühler zugeordnet sind. In Abhängigkeit von den von den Messfühlern generierten Signalen, wird ein Stellglied betätigt mit dem der Querförderer relativ zur Aufsammelmaschine seitlich verschoben wird. Dadurch wird der Erntegutstrom zur Mitte der Pressvorrichtung geführt, so dass eine ständig mittige Beschickung des Pressraums gewährleistet ist.
Nachteilig bei dieser bekannten Einrichtung an einer Ballenpresse ist, dass durch die mittige Beschickung keine gleichmäßige Befüllung über die gesamte Breite des Pressraums möglich ist, da der Schwad in der Regel schmaler als die Breite des Pressraums und in der Mitte höher als an seinen Rändern ist, so dass die Befüllung zu den Seiten des Pressraumes hin abnimmt und unförmige Ballen gepresst werden. An unförmig gepressten Ballen kann das in Ballenlängsrichtung verlaufende Bindegarn nur schwer halt finden. Oftmals lösen sich derartige Ballen beim Transport oder der Lagerung auf und werden dadurch unbrauchbar.
Zur gleichmäßigen Befüllung der Presskammer an Ballenpressen ist ein wechselseitiger Einlauf des Schwades in die Presskammer durch eine entsprechende Fahrweise des ziehenden Traktors erforderlich. Hierzu muss der Fahrer des Traktor den Schwadverlauf auf dem Feld und den Einlauf in die Ballenpresse verfolgen und eine gleichmäßige Befüllung der Ballenpresse, durch eine manuell gesteuerte Beschickung in Form einer Schlangenlinien- Fahrweise steuern.

Auch landwirtschaftlich genutzte Ladewagen, obliegen für eine optimale Befüllung des Laderaums, der Einschätzung und dem Können des Traktorfahrers. An Ladewagen wird die Optimierung zusätzlich, durch die in etwa der Laderaumbreite entsprechenden Aufnehmerbreite, erschwert. Ein gewisser Sicherheitsabstand zum Rand des Aufnehmers ist bei manueller Lenkung der Arbeitsmaschine erforderlich, wodurch automatisch die Aufnehmerbreite und somit auch die Laderaumbreite nicht vollständig ausgenutzt und nachteilig Transportkapazität verschenkt wird.

Die manuell gesteuerte Befüllung der Arbeitsgeräte, wie Ballenpressen oder Ladewagen, ist von dem Können und der Einschätzung des Traktorfahrers abhängig. Insbesondere bei Dunkelheit oder schlechten Sichtverhältnissen, verringert sich die Arbeitsqualität und Effizienz der Arbeitsgeräte.

Der Erfindung liegt daher die Aufgabe zugrunde, eine Vorrichtung zu schaffen, die die Nachteile des Standes der Technik vermeidet und mit der eine gleichmäßige Befüllung des Arbeitsgerätes gewährleistet ist.

Diese Aufgabe wird erfindungsgemäß durch die kennzeichnenden Merkmale des Anspruchs 1 gelöst. Weitere vorteilhafte Ausgestaltungen des Erfindungsgegenstandes ergeben sich aus den Unteransprüchen.
Erfindungsgemäß erzeugt die Verrechnungseinheit für die Lenkvorrichtung ein Lenksignal aus wenigstens einem ersten Lagesignal und wenigstens einem weiteren arbeitsgerätespezifischen Befüllstrategiesignal. Hierdurch werden vorteilhaft bei einer automatisch spurgeführten Arbeitsmaschine, auch die speziellen Fahrstrategien zur optimalen Befüllung der Arbeitsgeräte mit Erntegutspeicher berücksichtigt. Die erfindungsgemäße Vorrichtung ermöglicht unter verschiedenen Arbeitsbedingungen und für unterschiedliche Arbeitsgeräte, die Verwendung lediglich einer Vorrichtung. Einflüsse wie ungleichmäßige Schwade, Kurvenfahrt, ungleichmäßige Befüllung des Erntegutspeichers oder Hangabtrift können durch die Berücksichtigung des Lagesignals und des entsprechenden Befüllstrategiesignals automatisch ausgeglichen werden. Im Ergebnis werden gleichmäßig gepresste Erntegutballen oder eine optimale Ausnutzung der Ladekapazität eines Transportwagens unter gleichzeitiger Arbeitsentlastung des Traktorfahrers erzielt.

In einer ersten Ausgestaltung der Erfindung ermittelt die Verrechnungseinheit in Abhängigkeit von wenigstens einem Befüllsignal und /oder parameter-, zeit-, weg-und/oder ertragsabhängig das arbeitsgerätespezifische Befüllstrategiesignal und generiert hieraus einen wechselseitigen Spurversatz zum Lagesignal. Die Verrechnungseinheit erzeugt vorteilhaft ein genaues Lenksignal, welches eine genaue Verfolgung des Schwadverlaufes unter Berücksichtigung von optimalen Befüllvorgaben für das Arbeitsgerät erbringt. Die Befüllung wird vorteilhaft von der aktuellen Befüllung des Erntegutspeichers und/oder von wenigstens einem Arbeitsparameter, einer Zeit, einem Weg oder dem aktuellen Ertrag abhängig, in Form einer Schlangenlinie, automatisch gesteuert, wodurch jede Befüllung des Erntegutspeichers durch eine gleiche Schlangenlinie befüllt werden kann. Das Arbeitsergebnis ist somit nicht mehr ausschließlich von dem Können des Fahrers und den Sichtverhältnissen abhängig.

Die Lage des Schwades wird von wenigstens einer Ortungsvorrichtung erfasst und zumindest die Mitte des Schwades als Leitgröße und Lagesignal von der Verrechnungseinheit verarbeitet. In vorteilhafter Weise ist die Basis für die Spurführung eine genaue Ermittlung der relativen Lage des Schwades zur Arbeitsmaschine und insbesondere die ermittelte Mitte des Schwades als Leitgröße und Lagesignal, wodurch ein sicheres Aufnehmen des Schwades mittels des Aufnehmers gewährleistet wird. Weiterhin ist durch die Erfassung des Schwades, eine genaue Berechnung des Einlaufs des Schwades in das Arbeitsgerät und eine Vorausbestimmung des Einflusses auf die Befüllung des Erntegutspeichers möglich. Die Erfassung des Schwades ermöglich der Verrechnungseinheit das Lenksignal unter Berücksichtigung der Leitgröße und der Schwadbreite zu generieren.

In einem vorteilhaften Ausführungsbeispiel der Ortungsvorrichtung, weist diese einen Lichtwellensensor auf, der einen wenigstens eine Leitgröße aufweisenden Erfassungsbereich sensiert. Die Lichtwellensensoren haben einen großen Erfassungsbereich und arbeiten berührungslos. Bei entsprechender Anbringung an der Arbeitsmaschine, ist eine vorausschauende Erfassung des Schwades vor der Arbeitsmaschine und eine genaue Ermittlung der Schwadform möglich. Aus der abgetasteten Schwadkontur kann die Schwadmitte als Leitgröße und Lagesignal und die Schwadkanten in die Spurführung eingerechnet werden. Hierdurch ist es vorteilhaft möglich, dass von der Verrechnungseinheit ein Lenksignal bereitgesellt wird, welches eine volle Ausnutzung der Aufnehmerbreite des Arbeitsgerätes, d.h. die Generierung einer Schlangenlinie mit maximalem seitlichen Versatz zur Schwadmitte, unter Ausschluss eines Erntegutverlustes ermöglicht.

In einer vorteilhaften Ausgestaltung der Ortungsvorrichtung, weist diese wenigstens einen Tastbügel auf, welcher die Lage des Schwades durch eine Auslenkung des wenigstens einen Tastbügels mittels eines Drehwinkelsensor erfasst und in Abhängigkeit von der Lage des Schwades ein Lagesignal generiert. Hiermit lassen sich im besonderen die relative Lage des Schwades und deren Querschnittsform im Bereich der Aufnehmer der Arbeitsgeräte erfassen. Vorteilhaft können diese Tastbügel mit Drehwinkelsensoren an die Arbeitsgeräte angepasst eingesetzt werden und benötigen einen geringen Bauraum, sind robust im Aufbau und haben sich im landwirtschaftlichen Einsatz bewärt.

In einer vorteilhaften Ausgestaltung der Erfindung, weist die Arbeitsmaschine wenigstens eine Navigationseinrichtung auf, wobei von der Navigationseinrichtung ein Positionssignal für die Verrechnungseinheit bereitgestellt wird. Durch die Verfügbarkeit einer navigierten Position der Arbeitsmaschine, kann in Verbindung mit einer vorausschauenden Ortungsvorrichtung, der Schwadverlauf und somit die Fahrspur für die Arbeitsmaschine vorausschauend erfasst und in einen Speicher aufgezeichnet werden. Anhand der aktuell, navigierten Position und des zuvor aufgezeichneten Schwadverlaufes kann von der Verrechnungseinheit dann ein genaues Lenksignal an die Lenkvorrichtung übergeben werden.

In einer Weiterbildung der Erfindung weist die Arbeitsmaschine wenigstens ein Routenplanungssystem auf, wobei von dem Routenplanungssystem ein Lagesignal für die Verrechnungseinheit bereitgestellt wird. Durch die Verwendung eines Routenplanungssystems, kann der beispielsweise beim Schwaderzeugen aufgezeichnete Schwadverlauf, verwendet und sichere die Lage des Schwades erkannt und in Verbindung mit der aktuellen, navigierten Position der Arbeitsmaschine ein Lagesignal erzeugt werden. Ein nochmalige Erfassung beim Aufnehmen des Schwades in die Arbeitsmaschine kann hierdurch entfallen, wodurch vorteilhaft die Ortungsvorrichtung an dem Arbeitsfahrzeug eingespart werden kann. Ferner ist durch den bekannten, gesamten Schwadverlauf, eine beliebig weite Vorausberechnung von Lenksignalen unter erfindungsgemäßer Berücksichtigung des Befüllstrategiesignals möglich. Hieraus ergibt sich eine stabile Lenkkreisregelung.

Zur genauen und gleichmäßigen Beschickung der Arbeitsmaschine, ermittelt die Verrechnungseinheit die Befüllung des Arbeitsgerätes mit Erntegut über wenigstens einen Sensor und generiert in Abhängigkeit von der ermittelten Befüllung des Arbeitsgerätes das arbeitsgerätespezifische Befüllstrategiesignal. Hiermit wird vorteilhaft erreicht, das der tatsächliche Befüllzustand des Erntegutspeichers ermittelt und von der Verrechnungseinheit entsprechend berücksichtigt werden kann. Sich ändernde Ernteguteigenschaften in Bezug auf dessen Verdichtbarkeit werden zuverlässig direkt erkannt und eine vorteilhafte dynamische Anpassung des Befüllstrategiesignals, durch den wenigstens einen Sensor ermöglicht.

An einem als Ballenpresse ausgeführten Arbeitsgerät hat es sich als vorteilhaft erwiesen, die Befüllung der Ballenpresse von der Verrechnungseinheit mittels wenigstens zweier im Abstand zu den Pleuelstangen angeordneter Abstandssensoren, durch einen Größenvergleich der erfassten Befüllsignale, zu ermitteln. Diese Signalgewinnung macht sich den Effekt der presskraftabhängigen Durchbiegung an den Pleuelstangen am Presskolbenantrieb zu Nutze. Ein Größenvergleich der beiden Befüllsignale zeigt zuverlässig die Verteilung des Erntegutes im Pressraum, vorteilhaft ohne jeglichen Kontakt mit dem Erntegut, an.

In Ausgestaltung des Arbeitsgerätes als Ladewagen, ist es vorteilhaft, wenn die Befüllung des Ladewagens von der Verrechnungseinheit, mittels wenigstens zwei in den Laderaum eingreifende Tastbügel, durch einen Größenvergleich der erfassten Befüllsignale, ermittelt wird. Im Laderaum des Ladewagens findet nur eine geringe Bewegung des Erntegutes statt, wodurch eine geringe Abnutzung der Tastbügel vorherrscht. Weiterhin eignen sich Tastbügel als Befüllungssensoren, insbesondere durch ihre Möglichkeit mit einer definierten Vorspannung auf das Erntegut einwirken zu können und ermitteln somit das Vorhandensein und eine Verdichtung des Erntegutes im Laderaum.

Die Arbeitsmaschine ist ein Traktor mit einer angehängten Ballenpresse oder einem angehängten Ladewagen und das wenigstens eine Lagesignal wird zur automatischen Spurführung des Traktors verwendet und das arbeitsgerätespezifische Befüllstrategiesignal wird zur automatischen Bewegung/ Verschwenkung der Ortungsvorrichtung und/ oder der Deichsel verwendet. Eine derartige Aufteilung der Signal von der Verrechnungseinheit für die optimale Beschickung der Arbeitsmaschine, erbringt den Vorteil, dass bei einer Bewegung oder Verschenkung der Ortungsvorrichtung, einfache mechanische Mittel eingesetzt werden können und ferner der Fahrer den Steuerungsprozess der Verarbeitungseinheit optisch nachvollziehen kann. Bei einer Steuerung der Deichsel, muss der Traktor keine wechselseitigen Bewegungen um den Schwad herum ausführen, wodurch die Gefahr der Schwadüberfahrung reduziert und für den Fahrer auf dem Traktor ein angenehmeres Fahrgefühl erzeugt wird.

Dadurch das in der Verrechnungseinheit wenigstens ein Speicher vorhanden ist, in welchem wenigstens zwei Befüllstrategiekennlinien abrufbar hinterlegt sind, kann für die Generierung des arbeitsgerätespezifischen Befüllstrategiesignals, auf unterschiedliche Befüllstrategiekennlinien zurückgegriffen und auch vom Fahrer vorgegebene, spezielle Befüllvorgaben abgespeichert werden.

In einer vorteilhaften Weiterbildung der Erfindung, wird bei der Generierung des Lenksignals, die Schwadbreite und/oder die Aufnehmerbreite von der Verrechnungseinheit berücksichtigt. Die Schwadbreite und die Aufnehmerbreite geben der Verrechnungseinheit den maximal möglichen wechselseitigen Versatz zur Mitte des Schwades an. Durch diese Berücksichtigung ist eine sehr genaue Spurführung des Arbeitsgerätes, unter Ausnutzung der vollen Aufnehmerbreite bis an die Schwadkanten, und dadurch eine gleichmäßige Befüllung des Erntegutspeichers über dessen gesamten Breite möglich.

Weitere vorteilhafte Ausgestaltungen sind Gegenstand weiterer Unteransprüche. Die Erfindung soll nachfolgend an Hand von in mehreren Figuren dargestellten Ausführungsbeispielen näher erläutert.

Es zeigt:
- Fig.1: eine Draufsicht auf einen Traktor mit einer angehängten Ballenpresse,
- Fig.2: eine Draufsicht auf einen Traktor mit angehängtem Ladewagen,
- Fig.3: eine schematische Funktionsablauf der Verrechnungseinheit.

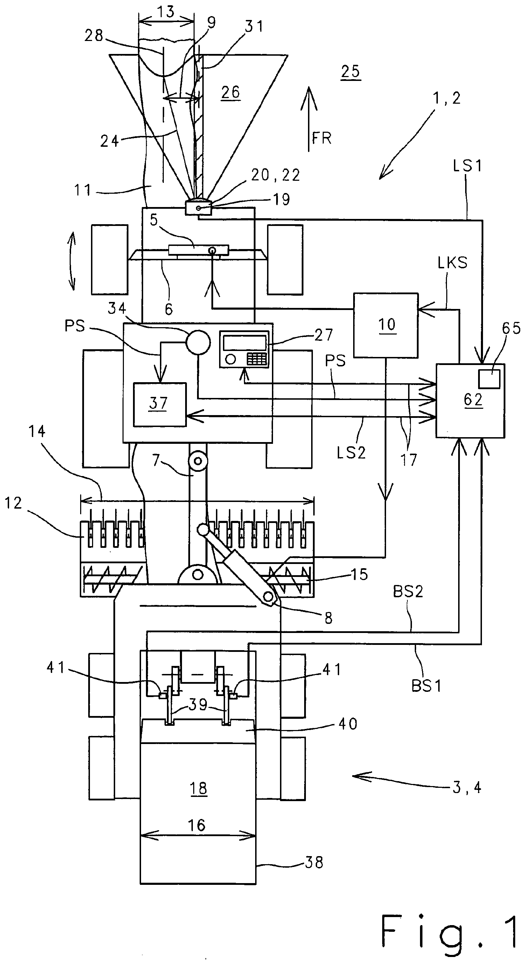

Fig.1 zeigt eine Draufsicht auf eine Arbeitsmaschine 2, bestehend aus einer Kombination aus einem Traktor 1 mit einem als Ballenpresse 3 ausgeführten Arbeitsgerät 4. Der hier gezeigte Traktor 1 weist eine über ein erstes Stellglied 5 betätigte, lenkbare Vorderachse 6 auf, mit der die Fahrtrichtung FR des Traktors 1 veränderbar ist. Die Ballenpresse 3 ist über eine Deichsel 7 an den Traktor 1 angehängt, wobei die Deichsel 7 gelenkig mit der Ballenpresse 3 sowie gelenkig mit dem Traktor 1 verbunden ist. Zwischen dem Traktor 1 und der Deichsel 7 der Ballenpresse 3 ist ein weiteres Stellglied 8 angeordnet, mit dem die Spur der Ballenpresse 3 gegenüber dem Traktor 1 verstellbar und die Einlaufstelle des Schwades 11 auf den Aufnehmer 12 einstellbar ist. Es sei an dieser Stelle darauf hingewiesen, dass das nachfolgend Ausgeführte, soweit es sich nicht auf die Steuerung einer Deichsel 7 bezieht, auch an einer selbstfahrenden Arbeitsmaschine Anwendung finden kann.
Der Traktor 1 weist eine automatische Lenkvorrichtung 10, mit den aus dem Stand der Technik bekannten Steuer- und Sicherheitsmitteln auf, mit der der Traktor 1 bei einer Erntefahrt auf dem Feld 25 entlang eines Schwades 11 spurgeführt wird. Weicht der Traktor 1 von einer vorgegebene Spur ab, veranlasst die automatische Lenkeinrichtung 10 zur Einhaltung der Spur, über das Stellglied 5, eine korrigierende Lenkbewegungen an der gelenkten Vorderachse 6 des Traktors 1. Weiterhin ist es dem Fachmann bekannt, die Achsen des Arbeitsgerätes 3, 4 mit einer hier nicht dargestellten Lenkeinrichtung zu versehen, wodurch die Spur der Ballenpresse 3 gegenüber dem Traktor 1 versetzt werden kann. Es liegt weiterhin im Rahmen der Erfindung, dass der Traktor 1 mit einer Allradlenkung ausgestattet sein kann.
Der von dem Traktor 1 überfahrene Schwad 11, wird mit einem an der Ballenpresse 3 angeordneten Aufnehmer 12 aufgenommen. Der Schwad 11 weist gewöhnlich eine Schwadbreite 13 auf, die schmaler als der Abstand der beiden Vorder- bzw. Hinterräder einer Achse 6 des Traktors 1 ist, so dass er nicht von den Rädern des Traktors 1 überfahren wird. Der Aufnehmer 12 weist dagegen eine Aufnehmerbreite 14 auf, die in der Regel breiter als die Schwadbreite 13 ist, so dass der Schwad 11 auf ganzer Breite aufgenommen wird. Durch in dem Aufnehmer 12 seitlich angeordnete Förderschnecken 15 wird der Schwad 11 auf die Presskanalbreite 16 zusammengeführt und durch weitere nicht näher dargestellte Fördermittel in den Pressraum 18 der Ballenpresse 3 gefördert.

An dem Traktors 1 ist hier im Frontbereich, um eine vertikale Schwenkachse 19 automatisch drehbar, eine Ortungsvorrichtung 20 angeordnet, die mittels eines in Fahrtrichtung FR des Traktors 1 gerichteten Abtaststrahls 21 eines Lichtwellensensors 22, die Entfernung der Ortungsvorrichtung 20 zum Feld 25 und zum Schwad 11 vorausschauend abtastet.
Es können jegliche dem Fachmann bekannte mechanisch oder berührungslos arbeitende Ortungsvorrichtungen zum Einsatz kommen, entscheidend ist vordergründig die mögliche Ermittlung der Leitgröße 28 als Lagesignal LS1, das bedeutet der relativen Lage der Mitte des Schwades 11 gegenüber der Arbeitsmaschine 2 bzw. dem Aufnehmer 12. Die dargestellte Ortungsvorrichtung 20, 22 errechnet mittels einer Laufzeitmessung zwischen einem gesendeten und dem zugehörigen, am Feld 25 oder Schwad 11 reflektierten, empfangenen Lichtimpulses, die relative Entfernung zwischen der Ortungsvorrichtung 20, 22 und dem Feld 25 oder Schwad 11. Der Abtaststrahl 21 wird in der gezeigten Ausführung um eine annähernd senkrechte Achse bezüglich der Ortungsvorrichtung 20, in einer horizontalen Ebene oszillierend hin- und herbewegt und tastet die Kontur des Schwades 11 bzw. des Feldes 25 in dem Erfassungsbereich 26 berührungslos ab. Die Kontur wird aus den von der Ortungsvorrichtung 22 generierten Entfernungssignalen in Verbindung mit der relativen Ausrichtung des Abtaststrahls 21 bezüglich des Traktors 1 ermittelt und entsprechend einer gesuchten Charakteristik, die Leitgröße 28 und das Lagesignal LS1 ermittelt. Im Ausführungsbeispiel erkennt die Ortungsvorrichtung 20 die kürzeste Entfernung zwischen Schwad 11 und der Ortungsvorrichtung 20 als Leitgröße 28, wobei sich diese in der Regel in der Mitte des Schwades 11 befindet. Es sei an dieser Stelle erwähnt, dass die Auswertung der einzelnen ermittelten Entfernungswerte im Erfassungsbereich 26 und der erkannten Kontur, auch durch die nachfolgend noch näher zu beschreibende Verrechnungseinheit 62 oder andere Einrichtungen, zur Ermittlung beispielsweise der Schwadbreite, des Schwadvolumens oder des Schwadquerschnittes, ausgewertet werden kann.

Auf dem Kabinendach des Traktors 1 ist wenigstens eine Navigationseinrichtung 34, wie beispielsweise eine GPS- Antenne, angeordnet, die ein Positionssignal PS des Traktors 1 auf dem Feld 25 in einem terrestrischen Bezugsystem ermittelt und zumindest an die Verrechnungseinheit 62 übergibt. Die einzelnen Positionen des Traktors 1 können in einem Speicher 65 abgespeichert werden und dann von der Verrechnungseinheit 62 zur Erkennung der Fahrtrichtung FR der Arbeitsmaschine 1 auf dem Feld oder in Verbindung mit den Arbeitsergebnissen der Ballenpresse 3, wie beispielsweise die Ballenablageposition oder der Schwadlänge pro Ballen, aufgezeichnet werden. Die aktuelle Position der Navigationseinrichtung 34, kann erfindungsgemäß an Hand der bekannten geometrischen Abmessungen des Traktor 1 und der von der Ortungsvorrichtung 20 erfassten Lage der Leitgröße 28 oder der Kontur, in Verbindung mit der Fahrrichtung FR zu einer aktuellen Schwadposition im terrestrischen Bezugsystem verrechnet und in einem Speicher 65 abgespeichert werden. Hierdurch wird vorausschauend der Schwadverlauf in eine Sollfahrspur für den Traktor 1 umgewandelt. Die Verrechnungseinheit 62 kann dann bei der Überfahrt des Schwades 11, an Hand des aufgezeichneten Schwadverlaufs und der von der Navigationseinrichtung 34 aktuell navigierten Position, das aktuelle Lagesignal LS2 generieren. Das Lagesignals LS1, LS2 zeigt in der Regel die Mitte des Schwades 11 und somit die Leitgröße 28 an. Unter Berücksichtigung lediglich eines Lagesignals LS1, LS2, könnte die Verrechnungseinheit 62, eine automatische Lenkeinrichtung 10 nur zur mittigen Aufnahme des Schwades 11 in den Presskanal 18 steuern.

Erfindungsgemäß ist der Einsatz eines Routenplanungssystems 37 auf dem Traktor 1 vorgesehen. Das Routenplanungssystem 37 erfasst nach dem zuvor beschrieben Verfahren, den absoluten Schwadverlauf selbstständig, gegebenenfalls durch eine Datenverbindung 17 über die Verrechnungseinheit 62 zur Ortungsvorrichtung 20, 22 und generiert ein Lagesignal LS2 an Hand der aktuellen Position des Traktors 1. Zwischen dem Routenplanungssystem 37 und der Verrechnungseinheit 62 besteht hierfür eine aus dem Stand der Technik bekannte bidirektionale Datenverbindung 17, wie beispielsweise eine CAN-Bus-Verbindung. Der Einsatz eines Routenplanungssystems 37 ermöglich vorteilhaft, auch die Verarbeitung eines anderweitig erfassten Schwadverlaufs, die Übermittlung weiterer Schwadkenngrößen, wie beispielsweise die Dichte, die Masse, die Querschnittsform, die Leitgröße 28 sowie der Schwadbreite 13. Während oder vor dem Einsatz der Arbeitsmaschine 2 auf dem Feld 25, kann dem Routenplanungssystem 37, durch dem Fachmann bekannte Mittel, die zumindest der Schwadverlauf im terrestrischen Bezugsystem übermittelt werden. So kann dann das Routenplanungssystem 37 neben der Generierung des Lagesignals LS2 auch eine optimierte Route zur Aufnahme des Schwades 11 vorschlagen. Hierbei ist eine spezielle Routenführung unter Berücksichtigung der Verschleppung von gezogenen Arbeitsgeräten 3, 4, 48 bei Kurvenfahrt und dem Schwadverlauf in Kurven möglich, und damit eine spezielle Einschränkung oder Erweiterung der maximalen zulässigen Größe des Versatzes 9. Diesen Einfluss kann das Routenplanungssystem 37 direkt in das Lagesignal LS2 einrechnen und zusätzlich eine Versatzkorrektur über die Datenverbindung 17 an die Verrechnungseinheit 62 übergeben. Selbstverständlich kann die Verrechnungseinheit 62 die Versatzkorrektur an die Aufnehmerbreite 14 entsprechende der Schwadbreite 13 selbsttätig vornehmen.

In dem Traktor 1 ist ein Bedienterminal 27 zur Bedienung der erfindungsgemäßen Vorrichtung angebracht. Über dieses Bedienterminal 27 können die zuvor genannten Schwadkenngrößen beziehungsweise das eingesetzte Arbeitsgerät 4 oder dessen Parameter ausgewählt oder verändert werden. Ferner ist eine Auswahl und Einstellung der gewünschten Befüllstrategiekennlinie hierüber möglich. Ein Kommunikation des Bedienterminal 27 findet mittels dem Fachmann bekannter Datenaustauschsysteme statt. Hier sein der Vollständigkeit halber auf das an landwirtschaftlichen Arbeitsmaschinen 2 eingesetzte, bekannte ISO-Bus-System hingewiesen. Sämtliche eingesetzte Arbeitsgeräte 4 sowie die Steuergeräte des Traktors 1, können über das bekannte Bus-System Daten zur Steuerung des Arbeitsprozesses, mit dem Bedienterminal 27 und der Verrechnungseinheit 62 austauschen.

Die in der Fig. 1 dargestellte Ballenpresse 3 ist als Quaderballenpresse 38 ausgeführt, bei der im Pressraum 18 ein über zwei beabstandete Pleuelstangen 39 angetriebener Presskolben 40 hin- und herbewegt wird. Das Erntegut wird von unten, bei zurückgezogenem Presskolben 40, zugeführt und dann mit einem Kolbenhub entgegen der Fahrtrichtung FR im Presskanal 18 zu einem Ballen verdichtet. Ist die zugeführte Erntegutschicht nicht gleichmäßig auf die Presskanalbreite 16 verteilt, so wirken in den Pleuelstangen 39 unterschiedliche Presskräfte, welche zu unterschiedliche Biegungen der Pleuelstange 39 führen. Diese Biegung wird mittels jeweils einem Abstandssensor 41 als Befüllsignale BS1, BS2 erfasst und durch einen Größenvergleich von der Verrechnungseinheit 62, zur Ermittlung der Befüllung des Pressraumes 18 verrechnet. Zur Ermittlung der Befüllung beziehungsweise der Verteilung des Erntegutes im Pressraum 18, können die dem Fachmann aus dem Stand der Technik bekannten Einrichtungen verwendet werden. Beispielsweise können für die Ermittlung der Befüllung, in der Ballenpresse bekannte, ermittelte Antriebsmomente einer oder mehrerer Antriebswelle(n) oder die Auslenkungen von im Rafferkanal quer zur Fahrrichtung verteilte Tastbügel, hierfür ausgewertet werden.

In dem hier dargestellten, begonnenen Arbeitsbetrieb, befindet sich in der Quaderballenpresse 38 noch keine Erntegut im Presskanal 18. Die Ortungsvorrichtung 20, 22 tastet mit dem gezeigten Abtaststrahl 21, die Mitte des Schwades 11 und somit direkt die Leitgröße 28 ab. Zwischen dem mittleren Bereich 31 des Erfassungsbereichs 26 besteht ein senkrechter Versatz 9 in etwa einer halben Schwadbreite 13. Die Verrechnungseinheit 62 steuert die Lenkachse 6 auf Geradeausfahrt an. Wird nun die Arbeitsmaschine 2 in Fahrtrichtung FR bewegt, läuft, wie auf der Figur 1 ersichtlich, der Schwad 11 auf der linken Seite der Ballenpresse 3 über den Aufnehmer 12, ein. In Verbindung mit dem neuen zu bildenden Ballen, wird zunächst aus der aktivierten Befüllstrategiekennlinie "Quaderballenpresse" ein anfänglicher Versatz 9 als arbeitsspezifisches Befüllstrategiesignal in Höhe des gezeigten Versatzes 9 ausgewählt und auf das Lagesignal LS1 oder LS2 addiert. Die automatischen Lenkvorrichtung 10 daraufhin den gewünschten Versatz 9 ein. Füllt sich nun der Presskanal 18, im Zuge einer Fortbewegung der Quaderballenpresse 38 auf dem Feld 25 entlang des Schwades 11, auf der linken Seite, wird diese Befüllung von den Abstandssensoren 41 erfasst und die Verrechnungseinheit 62 verringert den linksseitigen Versatz 9 an Hand der, aus dem Größenvergleich der Befüllsignale BS1, BS2 gewonnenen Befüllung des Presskanals 18, bis hin zu einem rechtsseitig zugelassene Versatz 9. Der Seitenwechsel wird somit von den Befüllsignalen BS1, BS2 ausgelöst, wobei die Geschwindigkeit des Versatzwechsels von links nach rechts in Verbindung mit der Befüllstrategiekennlinie zeit-, weg-, und/oder arbeitsparameterabhängig gesteuert erfolgen kann. Hierbei kann auch die Änderung der Befüllung einen Einfluss auf die gewählte Geschwindigkeit des Versatzwechsels nehmen.
Ändert sich der gewünschte Versatz 9 durch eine Veränderung des Schwadverlaufs, ändert sich die Lage der Leitgröße 28 gegenüber dem mittleren Bereich 31 und damit der ermittelte Versatz 9. Die Verrechnungseinheit 62 steuert nun über die Lenkvorrichtung 10 das Lenksignal LKS so an, dass der Versatz 9 korrigiert und sich der gewünschte Versatz 9 erneut einstellt. Die erfindungsgemäße Vorrichtung reagiert somit automatisch auf einen sich ändernden Schwadverlauf auf dem Feld 25 und eine sich ändernde Befüllung des Erntegutspeichers 18, mittels der automatischen Lenkvorrichtung 10.

Die Größe des Versatzes 9 beziehungsweise die Zeit-, Weg- oder Arbeitsparameter der Befüllstrategiekennlinie, lassen sich mittels des Bedienterminals 27 manuell einstellen. In einem als Teachln-Modus bekannte Lernfahrt, in welcher der Fahrer eine manuelle Lenkung der Arbeitsmaschine 2 durchführt und die vorhandenen Sensorwerte BS1, BS2, LS1, LS2, LKS, PS, die Zeit oder der Weg und der Lenkwinkel in einen Speicher 65 aufgezeichnet werden, ist ferner zur Einstellung der erfindungsgemäßen Vorrichtung beziehungsweise zum Lernen der Befüllstrategiekennlinie, denkbar. Weiterhin können bei der Generierung des arbeitsgerätespezifischen Befüllstrategiesignals von der Verrechnungseinheit 62, unter Berücksichtigung der entsprechenden Arbeitsparameter, auch Vorgabe wie: Versatzwechsel pro Ballen oder pro Zeiteinheit oder pro Schwadlänge Berücksichtigung finden. Diese Vorgaben sind gegebenenfalls mittels des Bedienterminals 27 einstellbar oder im Teachln-Modus ermittelbar.
Eine Korrektur des arbeitsspezifischen Befüllstrategiesignals an Hand einer manuell vom Fahrer des Traktors 1 in das Bedienterminal eingegebenen Beurteilung des Arbeitsergebnisses ist zu Findung der optimalen Befüllstrategiekennlinie weiterhin denkbar. Hierbei wird dann für den nächsten Ballen von der Verrechnungseinheit 62 oder einem vorhandenem Expertensystem, beispielsweise die manuelle Eingabe von "Ballen rechts zu klein", in eine verbesserte Befüllstrategiekennlinie umgesetzt, indem der rechtsseitige Versatz 9 größer, wenn der Aufnehmer 12 breit genug ist beziehungsweise der Schwellwert zum Auslösen eines Versatzwechsels höher gewählt.

Es kann erfindungsgemäß so vorgesehen sein, dass der Traktor 1 von der automatischen Lenkvorrichtung 10 an Hand eines Lagesignals LS1, LS2 automatisch entlang des Schwades 11 geführt und die Deichsel 7 mittels des Stellgliedes 8 von der automatischen Lenkvorrichtung 10 zum senkrechten rechts- bzw. linksseitigen Versatz 9 des Presskanals 18 relativ zum Schwad 11, von dem arbeitsspezifischen Befüllstrategiesignal gesteuert werden. Die verschwenkbare Deichsel 7 eignet sich insbesondere auch dafür, um die Hangabdrift der Ballenpresse 3, beim Arbeiten entlang eines Hanges, oder die Verschleppung beim Arbeiten entlang einer Kurvenfahrt auszugleichen. Diese Vorgänge können von geeigneten Sensoren erkannt und von der Verrechnungseinheit 62 oder vom vorhandenen Routenplanungssystem 37 gesteuert werden. Wird die Lage des Einlaufes des Schwades 11 auf den Aufnehmer 12 durch zusätzliche Sensoren erfasst, kann der gewünschte Einlauf in den Erntegutspeicher 18 durch eine Verschwenkung der Deichsel 8 genau auf die zuvor aus den Lagesignalen LS1, LS2 vorausberechneten Einlaufstelle am Aufnehmer 12 eingestellt werden.

Es liegt im Rahmen der Erfindung, das die Ballenpresse 3 ebenso als Rundballenpresse ausgeführt sein kann. Bei Rundballenpressen kann der Erntegutspeicher in Ausgestaltung eines Pressraums, aus mehreren nebeneinander liegenden endlosen Riemen oder umlaufende kettengeführte Stangen gebildet werden, die um mehrere Umlenkeinrichtungen geführt sind. Mit den Riemen oder Stangen wird das in den Pressraum eingebrachte Erntegut zu einem Rundballen geformt und dabei verdichtet. So ist beispielsweise an den beiden äußeren Endlosriemen jeweils ein Taster angeordnet, mit dem die Spannung des entsprechenden Riemens ermittelt werden kann. Die Spannung jedes Riemens ist von dem Befüllungsgrad des Pressraums an der Stelle des Riemens abhängig. Jedem Taster ist ein Drehwinkelsensor zugeordnet, der abhängig vom Befüllungsgrad im Bereich des entsprechenden Riemens ein Befüllsignal generiert.

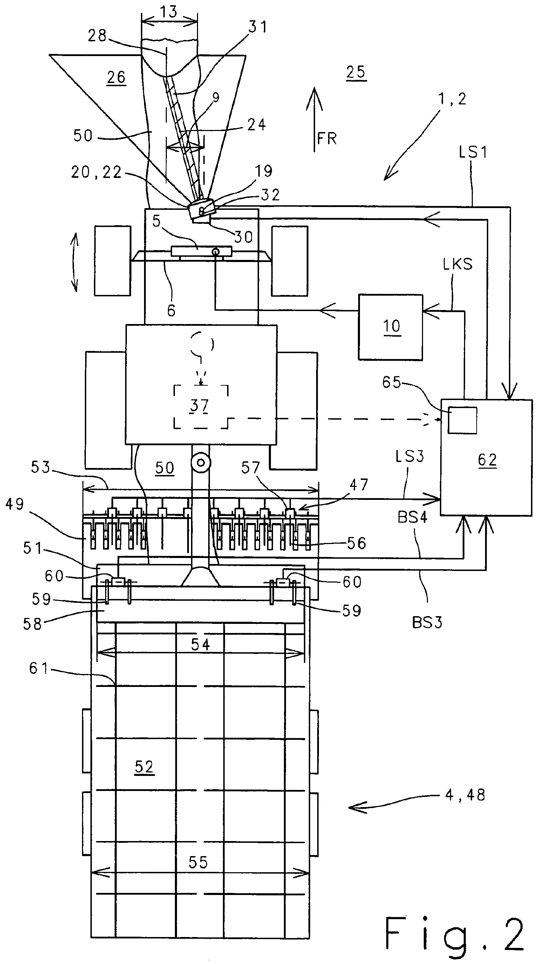

Das von dem Traktor 1 gezogene Arbeitsgerät 4 kann wie in Fig.2 dargestellt auch als Ladewagen 48 ausgeführt sein. An der Vorderseite des Ladewagens 48 ist ein Aufnehmer 49 angeordnet, der den auf den Boden liegenden Schwad 50 aufnimmt und an eine nicht näher ausgeführte Fördereinrichtung 51 übergibt, welche das Erntegut in einen Laderaum 52 befördert. Der aufgenommene Schwad 50 ist schmaler als die Breite 53 des Aufnehmers 49, welche in etwa mit der Breite 54 der Fördereinrichtung 51 sowie mit der Laderaumbreite 55 des Laderaums 52 übereinstimmt. Unmittelbar vor dem Aufnehmer 49 des Ladewagens 48 ist ein Ortungsvorrichtung 47 angeordnet, die aus mehreren symmetrisch über die Breite 53 des Aufnehmers 49 verteilten Tastbügeln 56 besteht. Die Tastbügel 56 erfassen die Lage des aufgenommenes Ernteguts im Einzugsbereich des Aufnehmers 49. Die Auslenkung jedes Tastbügels 56 wird über jeweils einen dem Tastbügel 56 zugeordneten Drehwinkelsensor 57 ermittelt, wobei die Drehwinkelsensoren 57 abhängig von der Auslenkung der Tastbügel 56 ein Signale generieren. Aus der Summe aller Signale wird zumindest ein Lagesignal LS3, welches die Höchste Stelle des Schwades 50 anzeigt, erzeugt.

In einem Aufgabebereich 58 des Laderaums 52 sind über die Laderaumbreite 55 verteilt im Bereich der vorderen Seitenwand, in einer bestimmten Höhe zwei doppelt ausgeführte Tastbügel 59 angeordnet, die die Befüllung im Laderaum 52 oberhalb des Aufgabebereichs 58 erfassen. Die Auslenkung jedes Tastbügels 59 wird über jeweils einen dem Tastbügel 59 zugeordneten Drehwinkelsensor 60 ermittelt. Die Befüllung des Laderaums 52 mit Erntegut, wird der Verrechnungseinheit 62 durch vonden Drehwinkelsensoren 60 erzeugten Befüllsignale BS3, BS4 angezeigt. Der Laderaum 52 weist einen Kratzboden 61 auf, der das Erntegut vom Aufgabebereich 58 in den hinteren Bereich des Ladewagens 48 fördert, wenn der Aufgabebereich 58 des Laderaums 52 auf ganzer Breite befüllt ist, so dass auch eine gleichmäßige Befüllung des Ladewagens 48 auf ganzer Länge ermöglicht wird. Das Lagesignale LS1 und das Lagesignale LS3 sowie die Befüllsignale BS3, BS4, werden an die Verrechnungseinheit 62 übermittelt.

In der hier dargestellten Ausführung, ist die Ortungsvorrichtung 20,22 mittels einer Stelleinrichtung 30 von der Verrechnungseinrichtung 62 fernsteuerbar um eine annähernd vertikalen Schwenkachse 19 einstellbar. Verlagert sich die Leitgröße 28 des Schwades 50 aus dem mittleren Bereich 31, so wird die Stelleinrichtung 30 so lange aktiviert, bis der mittlere Bereich 31 des Erfassungsbereiches 26 mit der Leitgröße 28 übereinstimmt. Durch diese Nachführung erstreckt sich der Erfassungsbereich 26 der Ortungsvorrichtung 20, 22 ständig über beide Schwadkanten hinaus, wodurch die Schwadbreite 13 sicher erkannt werden kann. Ferner werden Verlagerungen des Erfassungsbereich 26, während den durchgeführten Lenkbewegungen des Traktors 1, korrigiert und ein Verlieren des Schwades 50 aus dem Erfassungsbereich 26 sicher vermieden. Die aktuelle Stellung der Ortungsvorrichtung 20, 22 wird von einem Drehwinkelsensor 32 erfasst und der Sensorwert als Lagesignal LS1 an die Verrechnungseinheit 62 übermittelt. Die automatische Nachführung der Ortungsvorrichtung 20, 22 um die Schwenkachse 19, kann auch von einer nicht näher beschriebenen Steuerung der Ortungsvorrichtung 20 selbsttätig gesteuert werden.

Um den erfindungsgemäßen Versatz 9 erzielen zu können, wird von der Verrechnungseinheit 62 die Lenkvorrichtung 10, mittels eines Lenksignals LKS so lange angesteuert, bis das Lagesignal LS1 den gewünschten Versatz 9 anzeigt. Hierbei ist es jedoch erforderlich die Bewegung der Ortungsvorrichtung 20, 22 während der Versatzänderung unbeachtet zu lassen, da bei einer Durchführung der Lenkkorrektur die Ortungsvorrichtung 20,22 mit dem Traktor 1 verschenkt wird, so dass die hierbei erkannten Lagen des Schwades 50 verfälscht sind und keine Aussage über den Verlauf des Schwades 50 bezüglich des Aufnehmers 49 zulassen. Nach abgeschlossener Lenkkorrektur wird der sich neu einstellende Versatz 9 überprüft und bei Bedarf erneut eine Lenkkorrektur ausgeführt.

Es kann daher alternativ so vorgesehen sein, dass die Verrechnungseinheit 62 an Hand des gewünschten Versatzes 9 einen neuen Drehwinkel mittels der Stelleinrichtung 30 einstellt und die Verrechnungseinheit 62 dann die Lenkvorrichtung 10 so ansteuert, dass die Leitgröße 28 wieder im mittleren Bereich 31 des Erfassungsbereiches 26 liegt. Die Einstellung des Versatzes 9 erfolgt immer unter Berücksichtigung der äußeren Schwadkante des Schwades 50 im Aufnehmer 49. Hierbei wird die halbe Schwadbreite 13 zu dem Versatz 9 senkrecht zur Fahrtrichtung FR addiert und mit der halben Aufnehmerbreite 53 verglichen. Überschreitet eine Schwadkante die Aufnehmerbreite 53, wird von der Verrechnungseinheit 62 keine Vergrößerung des Versatzes 9 zugelassen beziehungsweise die Ortungsvorrichtung 20, 22 um den Betrag der Überschreitung zurück geschwenkt. Insbesondere in Verbindung mit einem vorhandenem Routenplanungssystem 37, können auch Kurvenverläufe des Schwades 50 bei der automatischen Spurführung berücksichtigt werden.

Es kann ferner vorgesehen sein, dass die Verrechnungseinheit 62 an Hand des Lagesignal LS3 die automatische Lenkung des Traktors 1 vornimmt und das Lagesignal LS1 zur Ermittlung einer vorausschauenden Planung der Lenksignale LKS und der Schwadbreite beziehungsweise des Schwadvolumens verwendet wird. Änderungen im Schwadverlauf sowie der Schwadbreite 13 werden vorzeitig erkannt und können dann in der Generierung des arbeitsgerätespezifischen Befüllstrategiesignals Berücksichtigung finden. Der von der Verrechnungseinheit 62 angestrebte maximale Versatzes 9, wird somit online an die aktuellen Arbeitsbedingungen, zur optimalen Beschickung des Arbeitsgerätes 4, 48, angepasst.

Überschreitet nun die Auslenkung des Tastbügels 59 eine bestimmte Auslenkung, wird von der Verrechnungseinheit 62 ein Wechsel des Versatzes 9, hier von links nach rechts eingeleitet und automatisch durchgeführt. Während diesem Wechsel läuft der Schwad 50 zunächst in Fahrtrichtung FR gesehen links, dann mittig und zum Schluss, rechts in den Laderaum 52 ein. Die Geschwindigkeit des Wechsels kann, wie zuvor schon an dem Ausführungsbeispiel an der Ballenpresse beschrieben, vom zurückgelegtem Weg, der Zeit oder weiteren Arbeitsparametern des Ladewagens 48 oder des Schwades 50 abhängig gesteuert werden. Insbesondere am Ladewagen 48 kann der Kratzboden 61 zusätzlich von der Verrechnungseinheit 62 gesteuert werden. Tritt beispielsweise bei nach einem eingeleiteten Versatzwechsel keine Veränderung an den Befüllsignale BS1 oder BS2 auf, so ist der Laderaum 52 im Aufgabebereich 58 über die gesamte Fördereinrichtungsbreite 54 gleichmäßig befüllt und der Kratzboden 61 muss zunächst das Erntegut in den hintern Teil des Laderaumes 52 befördern, danach kann der Versatzwechsel weiter ausgeführt werden.
Eine unabhängige Steuerung des Kratzbodens 61 in Verbindung mit den Befüllsignalen BS3, BS4 kann ebenfalls erfolgen.
Es liegt im Rahmen der Erfindung das dem Traktor 1 mit angehängtem Ladewagen 48, zumindest eine Navigationseinrichtung 34 und/oder Routenplanungseinrichtung 37 zugeordnet sein kann, die die absolute Position des Ladewagens 48 auf dem Feld 25 sensiert beziehungsweise zumindest ein Lagesignal LS2 erzeugt.

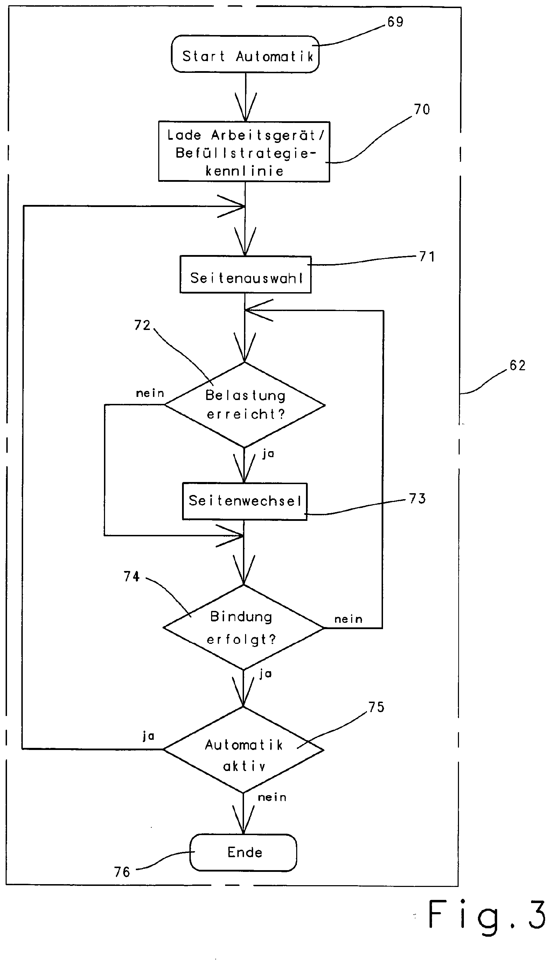

In Fig.3 ist der Funktionsaufbau der Verrechnungseinheit 62 an Hand einer Steuerung für eine Ballenpresse 3 nach Fig.1 schematisch dargestellt. Die Verrechnungseinheit 62 wird in einem ersten Funktionsschritt "Start" 69 gestartet. Anschließend werden in einem nachfolgenden Funktionsschritt "Strategieauswahl" 70, an Hand des eingesetzten Arbeitsgerätes 3, 4, 48 für dessen bevorstehende Beschickung mit Erntegut, eine in einem Speicher 65 hinterlegte Befüllstrategiekennlinie ausgewählt. Diese Befüllstrategiekennlinie beinhaltet den jeweils für eine optimale Befüllung des Arbeitsgerätes 3,4,48 notwendigen Versatzwechsel und ist dementsprechend verschiedenartig ausgestaltet. Der Versatzwechsel selbst wird dann beispielsweise an einer Ballenpresse 3 so vorgesehen, dass der maximal Versatz 9 in Verbindung mit der Schwadbreite 13 und der Presskanalbreite 16 die Befüllstrategiekennlinie bestimmen und ferner die Aktivierung des Versatzwechsel in Verbindung mit einem bestimmten Befüllsignalunterschied ausgelöst wird. Der Größe des Versatzes 9 wird dann an Hand der Befüllstrategiekennlinie zeit- oder weg- oder durchsatzabhängig gesteuert, bei eine Ballenpresse 3, linear um das Lagesignal LS1, LS2, LS3 herum ausgewählt, indem zunächst der maximal linksseitige Versatz 9 bis auf Null verringert und dann rechtsseitig bis auf den maximalen rechtsseitigen Versatz 9 vergrößert wird. Für einen Ladewagen 48 wird beispielsweise eine Befüllstrategiekennlinie gewählt, die in der Umgebung des Lagesignals LS1, LS2, LS3 eine verzögerte Veränderung des Versatzes 9 vorsieht.
In einem weiteren Funktionsschritt "Seitenauswahl" 71, wird dann eine Seite, rechtsseitig oder linksseitig, für den Versatz 9 ausgewählt. Dies kann automatisch oder auch vom Bedienterminal 27 manuell gesteuert erfolgen. Nimmt nun die Arbeitsmaschine 2 den Schwad 11, 50 vom Feld 25 auf, wird der Erntegutspeicher, hier der Presskanal 18, auf der gewählten Seite zumindest stärker mit Erntegut befüllt. An Hand der Befüllsignal BS1, BS2, wird von der Verrechnungseinheit 62 in einem weiteren Funktionsschritt "Belastung" 72, die Belastung der Pleuelstange 39 ermittelt. Überschreitet der Belastungswert einen Schwellwert, so wird in einem nächsten Funktionsschritt "Bindung" 74 der Status der Bindung abgefragt. Ist der Belastungswert noch nicht erreicht, wird die Beschickung der Ballenpresse 3 mit dem eingestellten Versatz 9 fortgeführt und der nächste Funktionsschritt "Seitenwechsel" 73 übersprungen. In dem Funktionsschritt "Bindung" 74 wird, wie schon erwähnt, der Status der Bindung abgefragt. Ist eine Bindung erfolgt, wird in einem weiteren Funktionsschritt "aktiv" 75, der Status der aktivierten Automatik abgefragt. Wurde erfolgte keine Bindung, wird zum Funktionsschritt "Belastung" 72 zurück gesprungen und die Belastung der Pleuelstangen 39 erneut abgefragt.
Wird während dem Arbeitsbetrieb der Ballenpresse 3, die Automatik abgeschaltet, veranlasst dies im Funktionsschritt "aktiv" 75 die Verrechnungseinheit 62, zu einem Sprung zum Funktionsschritt "Ende" 76, worauf die Verrechnungseinheit 62 die Generierung eines Lenksignals LKS an die Lenkvorrichtung 10 beendet. Eine aktive Automatik kann im Funktionsschritt "aktiv" 75 nach erfolgter Bindung von der Verarbeitungseinheit 62 erkannt werden und veranlasst diese zu einem Rücksprung zum Funktionsschritt "Seitenauswahl" 71. Hierdurch wird nach jedem erzeugten Ballen, durch dessen Bindung, die Verrechnungseinheit 62 zur Seitenauswahl des gewünschten Versatzes 9 aufgefordert. Die Befüllung eines neuen Ballens wird daher immer genau nach der Befüllstrategie des vorherigen Ballens ausgeführt.
Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung wie beansprucht zu verlassen.

**Bezugszeichenliste:**

| | | | |
|---|---|---|---|
| 1. | Traktor | 37. | Routenplanungssystem |
| 2. | Arbeitsmaschine | 38. | Quaderballenpresse |
| 3. | Ballenpresse | 39. | Pleuelstange |
| 4. | Arbeitsgerät | 40. | Presskolben |
| 5. | Stellglied | 41. | Abstandssensor |
| 6. | Vorderachse | 47. | Ortungsvorrichtung |
| 7. | Deichsel | 48. | Ladewagen |
| 8. | Stellglied | 49. | Aufnehmer |
| 9. | Versatz | 50. | Schwad |
| 10. | Automatische Lenkvorrichtung | 51. | Fördereinrichtung |
| 11. | Schwad | 52. | Laderaum |
| 12. | Aufnehmer | 53. | Aufnehmerbreite Ladewagen |
| 13. | Schwadbreite | 54. | Fördereinrichtungsbreite |
| 14. | Aufnehmerbreite Presse | 55. | Laderaumbreite |
| 15. | Schnecke | 56. | Tastbügel |
| 16. | Presskanalbreite | 57. | Drehwinkelsensor |
| 17. | Datenverbindung | 58. | Aufgabebereich |
| 18. | Presskanal | 59. | Tastbügel |
| 19. | Vertikale Schwenkachse | 60. | Drehwinkelsensor |
| 20. | Ortungsvorrichtung | 61. | Kratzboden |
| 21. | Abtaststrahl | 62. | Verrechnungseinheit |
| 22. | Lichtwellensensor | 63. | Befüllstrategiekurve |
| 25. | Feld | 64. | Befüllstrategiekurve |
| 26. | Erfassungsbereich | 65. | Speicher |
| 27. | Bedienterminal | 69. | Funktionsschritt "Start" |
| 28. | Leitgröße | 70. | Funktionsschritt "Strategieauswahl" |
| 30. | Stelleinrichtung | 71. | Funktionsschritt "Seitenauswahl" |
| 31. | Mittlerer Bereich | 72. | Funktionsschritt "Belastung" |
| 32. | Drehwinkelsensor | 73. | Funktionsschritt "Seitenwechsel" |
| 34. | Navigationseinrichtung | 74. | Funktionsschritt "Bindung" |
| 75. | Funktionsschritt "aktiv" | BS1 | Befüllsignal |
| 76. | Funktionsschritt "Ende" | BS2 | Befüllsignal |
| LKS | Lenksignal | BS3 | Befüllsignal |
| LS1 | Lagesignal | BS4 | Befüllsignal |
| LS2 | Lagesignal | FR | Befüllsignal |
| LS3 | Lagesignal | | |

## Patentansprüche

1. Vorrichtung zur gleichmäßigen Beschickung einer landwirtschaftlichen Arbeitsmaschine (2) und/oder eines Arbeitsgerätes (4) mit Erntegut, wobei während der Aufnahme eines Schwades vom Feld in einen Erntegutspeicher, eine automatische Spurführung mittels einer automatischen Lenkvorrichtung (10) erfolgt, wobei wenigstens eine Verrechnungseinheit (62) vorhanden ist, die für die Lenkvorrichtung (10) ein Lenksignal (LKS), aus wenigstens einem ersten Lagesignal (LS1, LS2, LS3) und wenigstens einem weiteren arbeitsgerätespezifischen Befüllstrategiesignal, erzeugt, wobei die Arbeitsmaschine (2) ein Traktor (1) mit einer angehängten Ballenpresse (3) oder einem angehängten Ladewagen ist und das wenigstens eine Lagesignal (LS1, LS2, LS3) zur automatischen Spurführung des Traktors (1) verwendet wird, wobei die Lage des Schwades (11) von wenigstens einer Ortungsvorrichtung (20, 47) erfasst und zumindest die Mitte des Schwades (11) als Leitgröße (28) und Lagesignal (LS1) von der Verrechnungseinheit (62) verarbeitet wird, wobei das arbeitsgerätespezifische Befüllstrategiesignal zur automatischen Bewegung/ Verschwenkung der Ortungsvorrichtung (20) und/ oder einer Deichsel (7) verwendet wird.

2. Vorrichtung nach Anspruch 1,
**dadurch gekennzeichnet,**
**dass** die Verrechnungseinheit (62) in Abhängigkeit von wenigstens einem Befüllsignal (BS1, BS2, BS3, BS4) und /oder parameter-, zeit-, weg- und/oder ertragsabhängig das arbeitsgerätespezifische Befüllstrategiesignal ermittelt und hieraus einen wechselseitigen Versatz (9) zum Lagesignal (LS1 ,LS2,LS3) generiert.

3. Vorrichtung nach wenigstens einem der vorhergehenden Ansprüche, **dadurch gekennzeichnet,**
**dass** die Ortungsvorrichtung (20) einen Lichtwellensensor (22) aufweist, der einen wenigstens eine Leitgröße (28) aufweisenden Erfassungsbereich (26) sensiert.

4. Vorrichtung nach wenigstens einem der vorhergehenden Ansprüche, **dadurch gekennzeichnet,**
**dass** die Ortungsvorrichtung (47) wenigstens einen Tastbügel (56) aufweist, welcher die Lage des Schwades (11) durch eine Auslenkung des wenigstens einen Tastbügels (56) mittels eines Drehwinkelsensor (57) erfasst und in Abhängigkeit von der Lage des Schwades (11) ein Lagesignal (LS3) generiert.

5. Vorrichtung nach wenigstens einem der vorhergehenden Ansprüche, **dadurch gekennzeichnet,**
**dass** die Arbeitsmaschine (2) wenigstens eine Navigationseinrichtung (34) aufweist, wobei von der Navigationseinrichtung (34) wenigstens ein Positionssignal (PS) für die Verrechnungseinheit (62) bereitgestellt wird.

6. Vorrichtung nach wenigstens einem der vorhergehenden Ansprüche, **dadurch gekennzeichnet,**
**dass** die Arbeitsmaschine (2) wenigstens ein Routenplanungssystem (37) aufweist, wobei von dem Routenplanungssystem (37) ein Lagesignal (LS2) für die Verrechnungseinheit (62) bereitgestellt wird.

7. Vorrichtung nach wenigstens einem der vorhergehenden Ansprüche, **dadurch gekennzeichnet,**
**dass** die Verrechnungseinheit (62) die Befüllung des Arbeitsgerätes (4) mit Erntegut über wenigstens einen Sensor (41, 59) ermittelt und in Abhängigkeit von der ermittelten Befüllung des Arbeitsgerätes (4) das arbeitsgerätespezifische Befüllstrategiesignal generiert.

8. Vorrichtung nach wenigstens einem der vorhergehenden Ansprüche, **dadurch gekennzeichnet,**
**dass** das Arbeitsgerät (4) eine Ballenpresse (3) ist und die Befüllung der Ballenpresse (3) von der Verrechnungseinheit (62) mittels wenigstens zweier im Abstand zu den Pleuelstangen (39) angeordneter Abstandssensoren (41), durch einen Größenvergleich der erfassten Befüllsignale (BS1, BS2), ermittelt wird.

9. Vorrichtung nach wenigstens einem der vorhergehenden Ansprüche, **dadurch gekennzeichnet,**
**dass** das Arbeitsgerät (4) ein Ladewagen (48) ist und die Befüllung des Ladewagens (48) von der Verrechnungseinheit (62) mittels wenigstens zwei in den Laderaum (52) eingreifende Tastbügel (59), durch einen Größenvergleich der erfassten Befüllsignale (BS3, BS4), ermittelt wird.

10. Vorrichtung nach wenigstens einem der vorhergehenden Ansprüche, **dadurch gekennzeichnet,**
**dass** in der Verrechnungseinheit (62) wenigstens ein Speicher (65) vorhanden ist, in welchem wenigstens zwei Befüllstrategiekennlinie abrufbar hinterlegt sind.

11. Vorrichtung nach wenigstens einem der vorhergehenden Ansprüche, **dadurch gekennzeichnet,**
**dass** bei der Generierung des Lenksignals (LKS), die Schwadbreite (13) und/oder die Aufnehmerbreite (14, 53) von der Verrechnungseinheit (62) berücksichtigt wird.

## Claims

1. Apparatus for uniformly loading an agricultural working machine (2) and/or a working implement (4) with crop material, wherein during the operation of picking up a swathe from the field and introducing it into a crop material storage device automatic track guidance is effected by means of an automatic steering device (10), wherein there is at least one computing unit (62) which for the steering device (10) generates a steering signal (LKS) from at least one first position signal (LS1, LS2, LS3) and at least one further working implement-specific filling strategy signal, wherein the working machine (2) is a tractor (1) with a trailed bale press (3) or a trailed loading truck and the at least one position signal (LS1, LS2, LS3) is used for automatic track guidance of the tractor (1), wherein the position of the swathe (11) is detected by at least one locating device (20, 47) and at least the centre of the swathe (11) is processed as a guide parameter (28) and position signal (LS1) by the computing unit (62), wherein the working implement-specific filling strategy signal is used for automatic movement/pivoting of the locating device (20) and/or a tow bar (7).

2. Apparatus according to claim 1 **characterised in that** the computing unit (62) ascertains the working implement-specific filling strategy signal in dependence on at least one filling signal (BS1, BS2, BS3, BS4) and/or in parameter, time, travel and/or yield dependent relationship and generates therefrom a mutual offset (9) relative to the position signal (LS1, LS2, LS3).

3. Apparatus according to at least one of the preceding claims **characterised in that** the locating device (2) has a light wave sensor (22) which senses a detection region (26) having at least one guide parameter (28).

4. Apparatus according to at least one of the preceding claims **characterised in that** the locating device (47) has at least one sensing bar (56) which detects the position of the swathe (11) by a deflection of the at least one sensing bar (56) by means of a rotary angle sensor (57) and generates a position signal (LS3) in dependence on the position of the swathe (11).

5. Apparatus according to at least one of the preceding claims **characterised in that** the working machine (2) has at least one navigation device (34), wherein at least one position signal (PS) is provided for the computing unit (62) by the navigation device (34).

6. Apparatus according to at least one of the preceding claims **characterised in that** the working machine (2) has at least one route planning system (37), wherein a position signal (LS2) is provided for the computing unit (62) by the route planning system (37).

7. Apparatus according to at least one of the preceding claims **characterised in that** the computing unit (62) ascertains filling of the working implement (4) with crop material by way of at least one sensor (41, 59) and generates the working implement-specific filling strategy signal in dependence on the ascertained filling of the working implement (4).

8. Apparatus according to at least one of the preceding claims **characterised in that** the working implement (4) is a bale press (3) and filling of the bale press (3) is ascertained by the computing unit (62) by means of at least two spacing sensors (41) arranged at a spacing relative to the connecting rods (39) by a comparison in respect of magnitude of the detected filling signals (BS1, BS2).

9. Apparatus according to at least one of the preceding claims **characterised in that** the working implement (4) is a loading truck (48) and filling of the loading truck (48) is ascertained by the computing unit (62) by means of at least two sensing bars (59) which engage into the load space (52) by a comparison in respect of magnitude of the detected filling signals (BS3, BS4).

10. Apparatus according to at least one of the preceding claims **characterised in that** present in the computing unit (62) is at least one memory (65) in which at least two filling strategy characteristics are retrievably stored.

11. Apparatus according to at least one of the preceding claims **characterised in that** the swathe width (13) and/or the pick-up device width (14, 53) is taken into consideration by the computing unit (62) in generation of the steering signal (LKS).

## Revendications

1. Dispositif pour l'alimentation uniforme d'une machine de travail agricole (2) et/ou d'un appareil de travail (4) avec du produit récolté, pendant le passage d'un andain depuis le champ vers un accumulateur de produit récolté étant effectuée une tenue de cap automatique au moyen d'un dispositif directionnel automatique (10), au moins une unité de calcul (62) étant prévue, laquelle génère pour le dispositif directionnel (10) un signal directionnel (LKS) à partir d'au moins un premier signal de position (LS1,LS2, LS3) et d'au moins un signal supplémentaire de stratégie de remplissage spécifique à l'appareil de travail, la machine de travail (2) étant un tracteur (1) avec une presse à balles attelée (3) ou avec une remorque autochargeuse attelée, et le au moins un signal de position (LS1, LS2, LS3) étant utilisé pour la tenue de cap automatique du tracteur (1), la position de l'andain (11) étant détectée par au moins un dispositif de localisation (20, 47), et au moins la moitié de l'andain (11) étant traitée par l'unité de calcul (62) en tant que grandeur guide (28) et que signal de position (LS1), le signal de stratégie de remplissage spécifique à l'appareil de travail étant utilisé pour le déplacement/pivotement automatique du dispositif de localisation (20) et/ou du timon (7).

2. Dispositif selon la revendication 1, **caractérisé en ce que** l'unité de calcul (62) détermine le signal de stratégie de remplissage spécifique à l'appareil de travail en fonction d'au moins un signal de remplissage (BS1, BS2, BS3, BS4) et/ou en fonction de paramètres, d'un temps, d'un trajet et/ou d'un rendement et, à partir de celui-ci, génère un décalage réciproque (9) par rapport au signal de position (LS1, LS2, LS3).

3. Dispositif selon au moins une des revendications précédentes, **caractérisé en ce que** le dispositif de localisation (20) comporte un capteur d'onde lumineuse (22) qui palpe une zone de détection (26) comportant au moins une grandeur guide (28) .

4. Dispositif selon au moins une des revendications précédentes, **caractérisé en ce que** le dispositif de localisation (47) comporte au moins un étrier palpeur (56) qui, au moyen d'un capteur d'angle de rotation (57), détecte la position de l'andain (11) par une déviation du au moins un étrier palpeur (56) et, en fonction de la position de l'andain (11), génère un signal de position (LS3).

5. Dispositif selon au moins une des revendications précédentes, **caractérisé en ce que** la machine de travail (2) comporte au moins un équipement de navigation (34), au moins un signal de positionnement (PS) étant fourni par l'équipement de navigation (34) pour l'unité de calcul (62).

6. Dispositif selon au moins une des revendications précédentes, **caractérisé en ce que** la machine de travail (2) comporte au moins un système de planification d'itinéraire (37), un signal de position (LS2) étant fourni par le système de planification d'itinéraire (37) pour l'unité de calcul (62).

7. Dispositif selon au moins une des revendications précédentes, **caractérisé en ce que**, par l'intermédiaire d'au moins un capteur (41, 59), l'unité de calcul (62) détermine le remplissage de l'appareil de travail (4) avec du produit récolté et, en fonction du remplissage déterminé de l'appareil de travail (4), génère le signal de stratégie de remplissage spécifique à l'appareil de travail.

8. Dispositif selon au moins une des revendications précédentes, **caractérisé en ce que** l'appareil de travail (4) est une presse à balles (3), et le remplissage de la presse à balles (3) est déterminé par l'unité de calcul (62), au moyen d'au moins deux capteurs d'écartement (41) disposés à distance des bielles (39), en comparant la grandeur des signaux de remplissage détectés (BS1, BS2).

9. Dispositif selon au moins une des revendications précédentes, **caractérisé en ce que** l'appareil de travail (4) est une remorque autochargeuse (48), et le remplissage de la remorque autochargeuse (48) est déterminé par l'unité de calcul (62), au moyen d'au moins deux étriers palpeurs (59) pénétrant dans l'espace de chargement (52), en comparant la grandeur des signaux de remplissage détectés (BS3, BS4).

10. Dispositif selon au moins une des revendications précédentes, **caractérisé en ce que** dans l'unité de calcul (62) est prévue au moins une mémoire (65) dans laquelle au moins deux courbe caractéristique de stratégie de remplissage sont enregistrées de manière consultable.

11. Dispositif selon au moins une des revendications précédentes, **caractérisé en ce que**, lors de la génération du signal directionnel (LKS), la largeur d'andain (13) et/ou la largeur de ramassage (14, 53) sont prises en compte par l'unité de calcul (62).
